# EUROPEAN PATENT SPECIFICATION

(11) **EP 1 072 516 B1**
(45) Date of publication and mention of the grant of the patent: **01.03.2006**
(21) Application number: 00113507.8
(22) Date of filing: 26.06.2000
(51) Int. Cl.: B65B 19/22, B65G 61/00, B65G 47/90, B65B 43/14

(54) **Unit for transferring packing material, e.g. stacks of blanks, to a cigarette packaging machine**
Anlage zum Überführen von Verpackungsmaterial, z.b. Zuschnittstapeln, zu einer Zigarettenverpackungsmaschine
Dispositif pour transférer des matériaux d'emballage. p.ex. des piles d'ébauches, à une machine d'emballage de cigarettes

(30) Priority: 30.06.1999 IT BO990354
(43) Date of publication of application: 31.01.2001
(73) Proprietor: G.D SOCIETÀ PER AZIONI, 40133 Bologna (BO) (IT)
(72) Inventor: Spatafora, Mario, 40100 Bologna (IT); Carini, Franco, 40057 Granarolo Emilia (IT)
(74) Representative: Eccetto, Mauro

(56) References cited:
- EP-A- 0 268 153
- EP-A- 0 296 346
- EP-A- 0 511 529
- EP-A- 0 774 433
- DE-A- 4 301 169
- GB-A- 2 205 300

## Description

The present invention relates to a unit for transferring packing material, defined for example by stacks of blanks, to an input of a cigarette packing machine.

Though reference is made in the following description, purely by way of example, to supplying stacks of blanks, the transfer unit according to the invention may also be used for supplying packing materials other than stacks of blanks and defined, for example, by reels of strip material.

In the conditioning of cigarettes, stacks of blanks; each comprising a number of blanks bound in a wrapper, are supplied individually to the input of a packing-machine. Normally, the stacks of blanks are arranged on a supporting pallet, which is positioned on a substantially horizontal supporting surface close to the input and supports a number of superimposed layers of stacks.

The packing machine normally has an automatic transfer unit comprising a pickup device for picking up and feeding each stack from the pallet to the input.

In one known automatic transfer unit of the above type (see for example GB-A-2 205 300), the pickup device is carried by an articulated supporting arm for moving the pickup device in a horizontal plane parallel to the supporting surface; and the articulated supporting arm itself is movable, by a lifting device, along a vertical column to set the pickup device to the height of the stack to be picked up.

Known transfer units of the above type have several drawbacks, mainly due to the presence of the vertical column and the lifting device fitted to it. That is, the articulated supporting arm and the pickup device must be fitted so as to project from the column, and, since the pallet can only be mounted alongside the column - i.e. in a lateral position with respect to the point at which the articulated supporting arm is connected to the lifting device - the articulated supporting arm, when extended, must be fairly long. Consequently, to ensure fast, accurate movement in space, the articulated supporting arm and the pickup device call for fairly rigid, high-cost connections both between each other and between the articulated supporting arm and the column.

It is an object of the present invention to provide a unit for transferring stacks of blanks to an input of a cigarette packing machine, and designed to eliminate the aforementioned drawbacks.

According to the present invention, there is provided a transfer unit for transferring packing materials, defined for example by stacks of blanks, to an input of a cigarette packing machine, the unit comprising gripping means for gripping a packing material item; and polar activating means for moving said gripping means, about a polar axis, along a pickup plane perpendicular to said polar axis and substantially coplanar with said input, and inside a given space enclosing said input and of such dimensions as to accommodate a pallet supporting said stacks and positioned parallel to said pickup plane; said gripping means being movable, with respect to said activating means, about a first axis parallel to said polar axis; and first actuating means being provided to vary a distance between said first axis and said polar axis; the transfer unit being characterized by comprising a fixed platform substantially perpendicular to said polar axis and supporting said activating means; and shift means for supporting said pallet in a position through which said polar axis extends, and for moving the pallet to and from said gripping means and along said polar axis.

A non-limiting embodiment of the present invention will be described by way of example with reference to the accompanying drawings, in which:
Figure 1 shows a partly sectioned side view of a preferred embodiment of the transfer unit according to the present invention;
Figure 2 shows a plan view, with parts in section and parts removed for clarity, of the Figure 1 unit in two different operating positions.

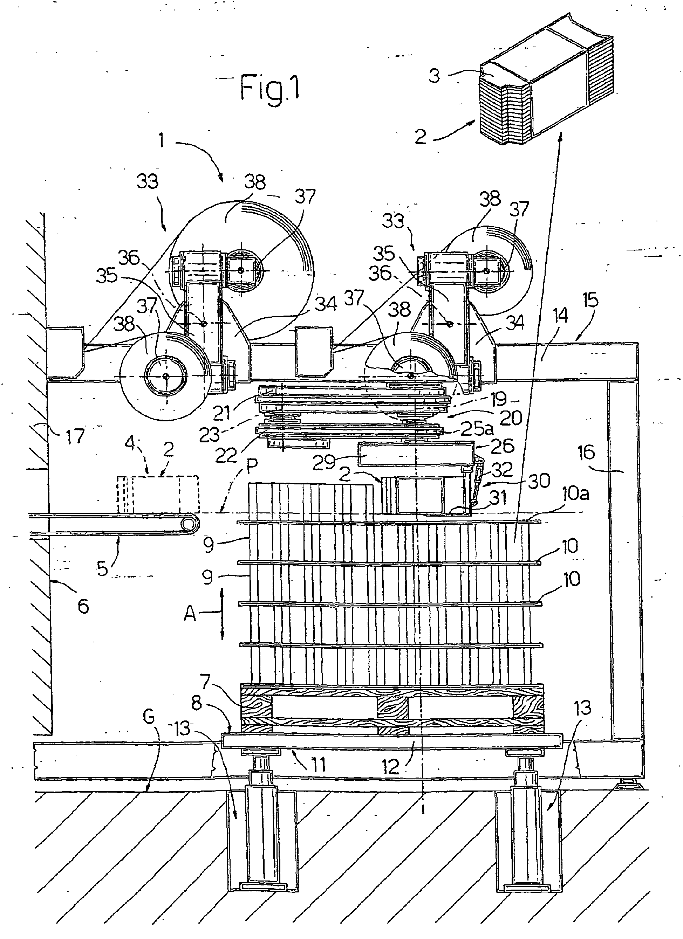

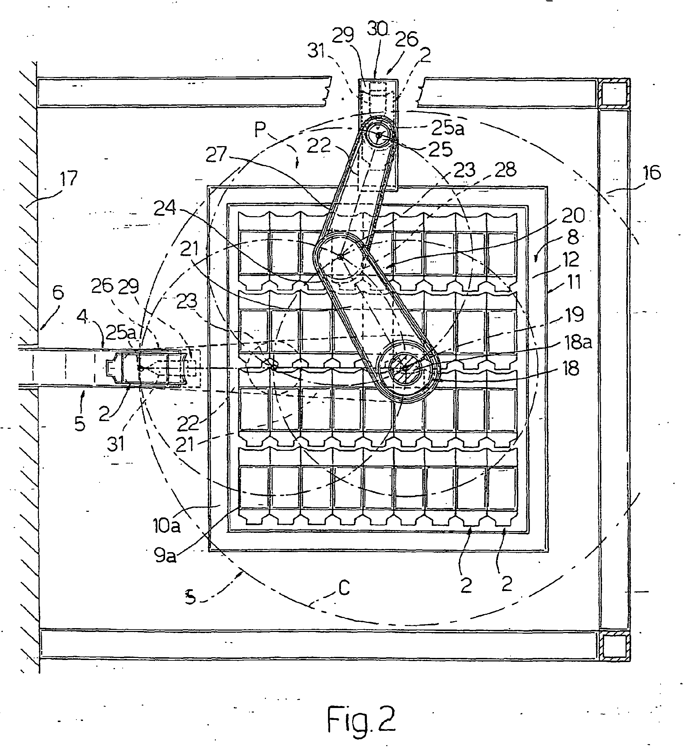

With reference to Figures 1 and 2, number 1 indicates as a whole a transfer unit for transferring stacks 2 of blanks 3 to an input 4 of a conveyor 5 for feeding stacks 2 onto a cigarette packing machine 6.

Stacks 2, each of which comprises a number of superimposed blanks 3 bound by a wrapper, are moved up to a point close to machine 6 on a pallet 7, which is positioned, close to input 4, on a substantially horizontal supporting surface 8 parallel to the ground G, and supports a number of layers 9 of stacks 2. Layers 9 are arranged one on top of the other, and are each supported on the adjacent underlying layer via the interposition of a substantially rigid board 10. In the following description, the top layer 9 of stacks 2 is indicated 9a, and the relative supporting board 10 indicated 10a.

Unit 1 comprises a lifting device 11, in turn comprising a horizontal platform 12, the top surface of which defines surface 8 supporting pallet 7, and a number of lifting jacks 13 supporting platform 12 and which are activated to move platform 12, in a vertical direction A, between a lowered position wherein supporting surface -8 is coplanar with ground G, and a raised position, described in detail later on, wherein platform 12 is located close to a fixed, substantially horizontal platform 14 defining the cross member of a gantry 15 of such a size as to enclose a space S large enough to receive both pallet 7 and input 4.

Gantry 15 comprises two uprights, which are integral with two opposite sides of platform 14, are defined respectively by a substantially vertical pillar 16 and by a frame 17 of packing machine 6, and support platform 14 in a position directly facing platform 12 and at a height, off ground G, greater than the height of platform 12 in the raised position.

Platform 14 supports a drive assembly 18 having three independent outputs (shown only partly) coaxial with an axis 19 parallel to direction A and extending through platforms 12 and 14. A first of said outputs, defined by a shaft 18a coaxial with axis 19, is connected integrally to an articulated arm 20 located between platforms 12 and 14 and rotated, by drive assembly 18 and with respect to platforms 12 and 14, about axis 19, which defines a polar axis of articulated arm 20.

Articulated arm 20 comprises a horizontal first arm 21 integral at one end with shaft 18a; and a second arm 22, one end of which is hinged to a free end of arm 21 to enable arm 22 to be rotated, with respect to arm 21 and about an axis 23 parallel to polar axis 19, by a transmission 24 extending along arm 21 and activated by a second (not shown) of the three outputs of drive assembly 18. A free end of arm 22 is fitted with a rotary vertical shaft 25 extending outside arm 22, coaxially with a vertical axis 25a, and connected integrally to a pickup device 26, which is rotated, together with shaft 25 and with respect to arm 22, by a transmission 27 activated by a third (not shown) of the three outputs of drive assembly 18, and a first portion (not shown) of which extends along arm 21 to activate two gears 28 integral with each other and mounted idly inside arm 21 and coaxially with axis 23, and a second portion of which extends along arm 22, from one of the two gears 28, to activate a gear fitted to shaft 25.

Arms 21 and 22 are of the same length. More specifically, the distance between polar axis 19 and axis 23 equals the distance between axis 23 and axis 25a. Consequently, by combining the two independent rotary movements of arm 21 about polar axis 19, and of arm 22 with respect to arm 21, pickup device 26 can be moved in a pickup plane P perpendicular to polar axis 19 and defined by input 4 and by pickup device 26 itself - to any point in plane P located within a circle C coaxial with polar axis 19 and having a radius of a length equal to twice the distance between axes 19 and 23. As shown in Figure 2, circle C is the intersection of plane P and space S, which is substantially cylindrical and substantially enclosed within gantry 15.

With reference to Figure 1, pickup device 26, which is a known type, comprises a horizontal plate 29 fitted to arm 22 and integral with one end of shaft 25.

Pickup device 26 also comprises a known gripping head 30 in turn comprising a fork 31, which is movable, in known manner by an actuator 32 and with respect to plate 29, to successively grip and convey stacks 2 along plane P to input 4.

In the example shown, fixed platform 14 is advantageously used to support, over articulated arm 20, devices 33 for replacing and feeding respective packing materials to packing machine 6. Each device 33 comprises a bracket 34 connected integrally to platform 14; and a rotary platform 35 fitted to bracket 34 to rotate about a respective axis 36 crosswise to direction A. At two portions on opposite sides of axis 36, each platform 35 supports two unwinding pins 37 parallel to axis 36 and for respective reels 38. Each supply device 33 is normally associated, in known manner not shown, with a respective store (not shown) of reels 38, which, when needed, are loaded automatically in known manner and alternately onto unwinding pins 37 of rotary platform 35.

In actual use, pallet 7, with relative stacks 2 of blanks 3, is positioned within space S on platform 12, and articulated arm 20 is moved over pallet 7 to determine, in known manner by means of a known system of sensors, the exact position of stacks 2 in layer 9a. The data relative.to the position of stacks 2 is transferred in known manner to a known electronic central control unit (not shown) for controlling all the movements of articulated arm 20 and pickup device 26; and articulated arm 20 is then arrested in a start position wherein fork 31 is positioned outwards of the projection of layer 9a in pickup plane P.

At this point, platform 12 is raised by jacks 13 in direction A to position board 10a just beneath pickup plane P; articulated arm 20 is then moved from said start position to position fork 31 facing a given lateral surface of a first stack 2 to be removed from layer 9a; and articulated arm 20 and gripping head 30 are then activated to cause fork 31, in known manner, to slide along board 10a and beneath the stack 2 to be removed, and to rotate with respect to plate 29 so as to raise stack 2 slightly off board 10a and into pickup plane P.

At this point, articulated arm 20 and pickup device 26 are activated to transfer the picked-up stack 2 to input 4 along a path selected each time by the central control unit (not shown) from those not interfering with the stacks 2 still on board 10a.

In connection with the above, it should be pointed out that locating articulated arm 20 beneath fixed platform 14 and over movable platform 12, so that polar axis 19 extends through platform 12, provides for minimizing the overall size of transfer unit 1, by spaceS accommodating not only pallet 7 with relative layers 9 of stacks 2, but also articulated arm 20 and relative pickup device 26.

Moreover, separating the vertical movement of articulated arm 20 from the horizontal movements of articulated arm 20 provides for minimizing vibration and guiding pickup device 26 extremely accurately.

Finally, the- fact that arms 21 and 22 are the same length provides for moving fork 31 to any point inside circle C, thus avoiding any dead zones always present on known pickup units comprising a lateral lift column - and so further reducing the size of space S.

## Claims

1. A transfer -unit for transferring packing materials, defined for example by stacks of blanks, to an input of a cigarette packing machine, the unit (1) comprising gripping means (26) for gripping a packing material item (2); and polar activating means (20) for moving said gripping means (26), about a polar axis (19), along a pickup plane (P) perpendicular to said polar axis (19) and substantially coplanar with said input (4), and inside a given space (S) enclosing said input (4) and of such dimensions as to accommodate a pallet (7) supporting said stacks (2) and positioned parallel to said pickup plane (P); said gripping means (26) being movable, with respect to said polar activating means (20), about a first axis (25a) parallel to said polar axis (19); and first actuating means (18a, 24) being provided to vary a distance between said first axis (25a) and said polar axis (19); the transfer unit being **characterized by** comprising a fixed platform (14) substantially perpendicular to said polar axis (19) and supporting said polar activating means (20); and shift means (11) for supporting said pallet (7) in a position through which said polar axis (19) extends, and for moving the pallet (7) to and from said gripping means (26) and along said polar axis (19).

2. A unit as claimed in Claim 1, **characterized in that** said polar activating means (20) comprise an articulated arm (20) in turn comprising a first (21) and a second (22) arm hinged to each other at a second axis (23) parallel to said first axis (25a) and to said polar axis (19); the distance between said first axis (25a) and said second axis (23) being substantially equal to the distance between said second axis (23) and said polar axis (19).

3. A unit as claimed in Claim 2, **characterized in that** said space (S) intersects said pickup plane (P) along a circle (C) coaxial with said polar axis (19) and having a radius of a length equal to twice the distance between said first axis (25a) and said second axis (23); all the points in said pickup plane (P) within said circle (C) being reachable by said gripping means (26).

4. A unit as claimed in Claim 2 or 3, **characterized in that** said first actuating means (18a, 24) impart to said first (21) and said second (22) arm a first and, respectively, second rotary movement, combinable with each other, about said polar axis (19) and said second axis (23) respectively.

5. A unit as claimed in any one of Claims 1 to 4, **characterized in that** said shift means (11) comprise a movable platform (12) facing and substantially parallel to said fixed platform (14) and defining a supporting surface (8) for said pallet (7); and second actuating means (13) for moving said movable platform (12) along said polar axis (19).

6. A unit as claimed in any one of Claims 1 to 5, **characterized in that** said fixed platform (14) is a platform supporting means (33) for supplying packing material to said packing machine (6).

7. Use of a unit as claimed in any one of Claims 1 to 6, **characterized in that** said packing material items are defined by stacks (2) of blanks (3).

## Patentansprüche

1. Anlage bzw. Einheit zum Überführen von Verpackungsmaterialien, die beispielsweise durch Stapeln von Zuschnitten definiert sind, zu einer Eingabe einer Zigarettenverpackungsmaschine, wobei die Anlage (1) Greifmittel (26) zum Ergreifen eines Verpackungsmaterialsgegenstands bzw. -stücks (2); und Polar- bzw. Polaktivierungsmittel (20) zum Bewegen der Greifmittel (26) um eine Polachse (19) entlang einer Aufnahmeebene (P) senkrecht zu der Polachse (19) und im wesentlichen koplanar mit der Eingabe (4) und im Inneren eines gegebenen Raums (S) umfaßt, der die Eingabe (4) einschließt und von derartigen Abmessungen ist, um eine Palette (7) aufzunehmen, die die Stapel (2) abstützt und parallel zu der Aufnahmeebene (P) angeordnet ist; wobei die Greifmittel (26) in bezug auf die Polaktivierungsmittel (20) um eine erste Achse (25a) parallel zu der Polachse (19) bewegbar sind; und wobei erste Betätigungsmittel (18a, 24) zur Verfügung gestellt sind, um einen Abstand zwischen der ersten Achse (25a) und der Polachse (19) zu variieren; wobei die Anlage zum Überführen **dadurch gekennzeichnet ist, daß** sie umfaßt eine festgelegte Plattform (14) im wesentlichen senkrecht zu der Polachse (19) und welche die Polaktivierungsmittel (20) abstützt; und Verschiebemittel (11) zum Abstützen der Palette (7) in einer Position, durch welche sich die Polachse (19) erstreckt, und zum Bewegen der Palette (7) zu und von den Greifmitteln (26) und entlang der Polachse (19).

2. Anlage nach Anspruch 1, **dadurch gekennzeichnet, daß** die Polaktivierungsmittel (20) einen abgewinkelten bzw. Gelenkarm (20) umfassen, der wiederum einen ersten (21) und einen zweiten (22) Arm umfaßt, die aneinander an einer zweiten Achse (23) angelenkt sind, die parallel zur ersten Achse (25a) und zu der Polachse (19) ist; wobei der Abstand zwischen der ersten Achse (25a) und der zweiten Achse (23) im wesentlichen gleich dem Abstand zwischen der zweiten Achse (23) und der Polachse (19) ist.

3. Anlage nach Anspruch 2, **dadurch gekennzeichnet, daß** der Raum (S) die Aufnahmeebene (P) entlang eines Kreises (C) schneidet, welcher koaxial mit der Polachse (19) ist und einen Radius einer Länge gleich dem Doppelten des Abstands zwischen der ersten Achse (25a) und der zweiten Achse (23) aufweist; wobei alle Punkte in der Aufnahmeebene (P) innerhalb des Kreises (C) durch die Greifmittel (26) erreichbar sind.

4. Anlage nach Anspruch 2 oder 3, **dadurch gekennzeichnet, daß** die ersten Betätigungsmittel (18a, 24) dem ersten (21) und dem zweiten (22) Arm eine erste bzw. zweite Rotationsbewegung, die miteinander kombinierbar sind, um die Polachse (19) bzw. die zweite Achse (23) verleihen.

5. Anlage nach einem der Ansprüche 1 bis 4, **dadurch gekennzeichnet, daß** die Verschiebemittel (11) eine bewegbare Plattform (12), die zu der feststehenden Plattform (14) gerichtet ist und im wesentlichen parallel zu dieser ist und eine abstützende bzw. Supportoberfläche (8) für die Palette (7) definiert; und zweite Betätigungsmittel (13) zum Bewegen der bewegbaren Plattform (12) entlang der Polachse (19) umfassen.

6. Anlage nach einem der Ansprüche 1 bis 5, **dadurch gekennzeichnet, daß** die fixierte Plattform (14) ein Plattformunterstüzungsmittel (33) zum Zuführen von Verpackungsmaterial zur Verpackungsmaschine (6) ist.

7. Verwendung einer Anlage bzw. Einheit nach einem der Ansprüche 1 bis 6, **dadurch gekennzeichnet, daß** die Verpackungsmaterialstücke bzw. -gegenstände durch Stapel (2) von Zuschnitten (3) definiert sind.

## Revendications

1. Unité de transfert pour transférer des matériaux d'emballage, définis par exemple par des piles d'ébauches, à une entrée d'une machine d'emballage de cigarettes, l'unité (1) comprenant des moyens de saisie (26) pour saisir un élément de matériel d'emballage (2) ; et des moyens d'activation polaires (20) pour déplacer lesdits moyens de saisie (26) autour d'un axe polaire (19), le long d'un plan de ramassage (P) perpendiculaire audit axe polaire (19) et sensiblement coplanaire avec ladite entrée (4), et à l'intérieur d'un espace donné (S) renfermant ladite entrée (4) et dont les dimensions permettent de loger une palette (7) supportant lesdites piles (2) et positionnée parallèlement audit plan de ramassage (P) ; lesdits moyens de saisie (26) pouvant se déplacer, par rapport auxdits moyens d'activation polaires (20), autour d'un premier axe (25a) parallèle audit axe polaire (19) ; et des premiers moyens d'actionnement (18a, 24) prévus pour modifier une distance entre ledit premier axe (25a) et ledit axe polaire (19) ; l'unité de transfert étant **caractérisée en ce qu'**il comprend une plate-forme fixe (14) sensiblement perpendiculaire audit axe polaire (19) et supportant lesdits moyens d'activation polaires (20) ; et des moyens de déplacement (11) pour supporter ladite palette (7) dans une position par laquelle ledit axe polaire (19) s'étend, et pour déplacer la palette (7) jusque et à partir desdits moyens de saisie (26) et le long dudit axe polaire (19).

2. Unité selon la revendication 1, **caractérisée en ce que** lesdits moyens d'activation polaires (20) comprennent un bras articulé (20) qui comprend à son tour un premier (21) et un second bras (22) articulés l'un à l'autre au niveau d'un second axe (23) parallèle audit premier axe (25a) et audit axe polaire (19) ; la distance entre ledit premier axe (25a) et ledit second axe (23) étant sensiblement égale à la distance entre ledit second axe (23) et ledit axe polaire (19).

3. Unité selon la revendication 2, **caractérisée en ce que** ledit espace (S) croise ledit plan de ramassage (P) le long d'un cercle (C) qui est coaxial avec ledit axe polaire (19) et a un rayon dont la longueur est égale à deux fois la distance entre ledit premier axe (25a) et ledit second axe (23) ; tous les points dans ledit plan de ramassage (P) à l'intérieur dudit cercle (C) pouvant être atteints par lesdits moyens de saisie (26).

4. Unité selon la revendication 2 ou 3, **caractérisée en ce que** lesdits premiers moyens d'actionnement (18a, 24) communiquent auxdits premier (21) et second bras (22) un premier et, respectivement, second mouvement rotatif, combinables l'un avec l'autre, autour dudit axe polaire (19) et dudit second axe (23), respectivement.

5. Unité selon l'une quelconque des revendications 1 à 4, **caractérisée en ce que** lesdits moyens de déplacement (11) comprennent une plate-forme mobile (12) faisant face et étant sensiblement parallèle à ladite plate-forme fixe (14) et définissant une surface de support (8) pour ladite palette (7) ; et des seconds moyens d'actionnement (13) pour déplacer ladite plate-forme mobile (12) le long dudit axe polaire (19).

6. Unité selon l'une quelconque des revendications 1 à 5, **caractérisée en ce que** ladite plate-forme fixe (14) est un moyen de support de plate-forme (33) pour fournir un matériau d'emballage à ladite machine d'emballage (6).

7. Utilisation d'une unité selon l'une quelconque des revendications 1 à 6, **caractérisée en ce que** lesdits éléments de matériau d'emballage sont définis par des piles (2) d'ébauches (3).
